# EUROPEAN PATENT APPLICATION

(11) **EP 1 568 579 A1**
(43) Date of publication of application: **31.08.2005**
(21) Application number: 05004004.7
(22) Date of filing: 24.02.2005
(51) Int. Cl.: B62D 25/16

(54) **Vehicles mudguard structure and its manufacturing method**

(30) Priority: 24.02.2004 IT BS20040024
(71) Applicant: Benussi, Giampaolo, 25122 Brescia (IT); Benussi, Franco, 25123 Brescia (IT)
(72) Inventor: Benussi, Giampaolo, 25122 Brescia (IT); Benussi, Franco, 25123 Brescia (IT)
(74) Representative: Vannini, Mario

(57) **Abstract**

A mudguard structure for vehicles, particularly commercial motor vehicles, for restricting water spray thrown up by the wheels (R), comprises a convex cover wall (2) shaped like a substantially cylindrical arc, securable to the vehicle (V) frame, an inner curved sheet member (3) having a plurality of apertures (4) for the passage of water raised by the wheels (R), characterized in that the cover wall (2) has a plurality of inwardly extending projections (7) whose end portions (8) are shaped to receive attachment means (9) for securing the sheet member (3) at a predetermined distance from the cover wall (2), so as to define a chamber (Q) for conveying the water raised by the wheels (R) during driving.

## Description

### Field of the Invention

This invention finds application in the automotive field and relates, according to the preamble of claim 1, to a mudguard structure for vehicles, particularly commercial vehicles, having the capability of reducing water sprayed by the wheels.

A further aspect of the invention relates to a method of making such mudguard structure.

### Prior art

When driving on wet, e.g. rain drenched roads, vehicle wheels collect water from the roadway and propel it against vehicle structures while causing water suspended in air to form a cloud which strongly impairs visibility of the drivers of vehicles behind.

This problem is particularly felt in commercial vehicles and big goods carrying vehicles.

Typically, commercial vehicles have structures attached to the vehicle's chassis, level with the wheels, which are known as mudguards, for screening and containing raised water, which are normally shaped like the arc of a circle to comply with the profile of wheels.

While these prior art devices can catch most of the thrown up water, they do not inhibit water spray and mist formation, which impairs visibility of drivers of the other vehicles.

When water hits the mudguard, droplets are generated which are caught by the turbulence surrounding the moving vehicle and dispersed in various directions.

Various devices are known for attachment to mudguards to limit the formation of such mist or spray.

A prior art device is formed by a succession of fins applied to the mudguard surface facing the wheel, at a suitable angle relative to the radial direction, to catch water rebounding from the inner surface of the mudguard. According to an embodiment of such device, the free edges of the fins are bent to form a succession of collection and drainage channels.

Another prior art device comprises a set of brush-like elements fitted along the inner surface of the mudguard, parallel thereto, or in such a position as to form an angle relative to the radial direction, to absorb water impingement energy and inhibit the formation of mist.

In yet another device, the inner surface of the mudguard has saw-toothed profiles extending parallel to the wheel axle.

Some examples of these prior art devices to be mounted to mudguards of trucks or commercial vehicles are disclosed in patents GB-A-2334937, EP-A-897854, EP-A-353494, EP-A-74844.

GB-A-2078181 discloses a structure for restricting water spray from the wheels of commercial vehicles, which is composed of one or more flat box-like members, to be fitted to the lower edge of the mudguard behind the wheel and extending downwards to proximity with the roadway. The wall facing the wheel is perforated to allow impinging water to enter the box-like member. Water remains trapped therein, is not caught by turbulence and is discharged to the ground without being sprayed.

A drawback of this prior art arrangement consists in that it does not inhibit spraying of water propelled against the inner surface of the mudguard.

Worldwide patent application WO-A-02/060743 discloses a structure having a plate-like member located in the intrados of the mudguard and composed of a succession of fins oriented at an angle relative to the radial direction, which delimit a water collection chamber. A basic feature of the invention is the introduction of air in such chamber, through an air intake situated at the top of the extrados to facilitate water drainage to the ground without water spray formation due to the turbulence generated by the vehicle.

Mudguard structures are also known in which a perforated plate is placed parallel to the inner surface of the mudguard and secured thereto by screw fasteners such as a bolt and nut with an interposed spacer, generally coaxial to the bolt, to keep the perforated plate at a distance from the mudguard. The water entering the perforations of the plate is retained and discharged to the ground from the lower edge of the mudguard and is not dispersed by turbulence.

A drawback of this prior art arrangement lies in that it requires internal members, i.e. the perforated plate, to be mounted to the mudguard when the latter is already mounted to the motor vehicle structure, which is not an easy operation.

A further drawback is that a long time is required for each fastening point, as the operator is required to mount, in an uncomfortable position, the perforated plate, the bolt, the spacer coaxial to the bolt and the nut, whereby the number of fastening points will have to be minimized.

Another drawback lies in that the perforated plate is subjected to important aerodynamic stresses caused by turbulence and tends to be torn by spacers, which causes plate removal.

Yet another drawback consists in that, when the perforated plate needs to be removed, e.g. for cleaning or for replacement of a torn member, removal and re-installation are long and troublesome operations.

### Summary of the invention

The main object of this invention is to obviate the above drawbacks, by providing a mudguard structure for vehicles, particularly commercial motor vehicles such as vans and trucks, having high performance, simple construction and low cost properties.

A particular object is to provide a mudguard structure which may be preassembled at the workshop in comfortable conditions and may be mounted to the vehicle in a very short time.

A further object of the invention is to provide a mudguard structure having a minimized number of parts.

Another object of the invention is to provide a mudguard structure having more fastening points, for a better distribution of turbulence loads and a lower occurrence of tearing and replacements of structure parts.

Yet a further object of the invention is to provide a mudguard structure that can be easily and conveniently maintained.

These objects, as well as other objects that will be more apparent hereafter, are achieved by a mudguard structure for vehicles, particularly a commercial motor vehicle, for restricting water spray thrown up by the wheels, comprising a substantially convex cover wall securable to the frame of a vehicle, a sheet member having a plurality of apertures for the passage of water spray thrown up by the wheel, characterized in that said cover wall has a plurality of projections extending radially inwardly and having end portions so shaped to interact with attachment means for securing said sheet member to said cover wall at a predetermined distance from this latter so as to define with said cover wall a chamber for conveying the sprayed water.

According to a further aspect of the invention, a manufacturing method is provided for making said mudguard structure which, according to claim 12, which is characterized in that it comprises a step a) of forming a cover wall; a step b) of forming projections on said cover wall, which extend inwards from said cover wall; a step c) of forming a sheet member with a plurality of apertures for water passage; a step d) of forming at least one hole for attachment means in said sheet member; a step e) of providing attachment means in said holes; and a step f) of securing said sheet member to said projections to define with said cover wall a water conveying chamber. Furthermore, the steps a) of forming the cover wall and b) of forming projections on said cover wall are carried out simultaneously by moulding of a thermoplastic material.

The present structure and method provide a mudguard structure for commercial vehicles, which is particularly effective in restricting water sprayed from the wheels.

### Brief description of the drawings

Further features and advantages of the invention will be more apparent from the detailed description of one preferred, non-exclusive embodiment of a mudguard structure according to the invention, which is described as a non-limiting example with the help of the annexed drawings, in which:

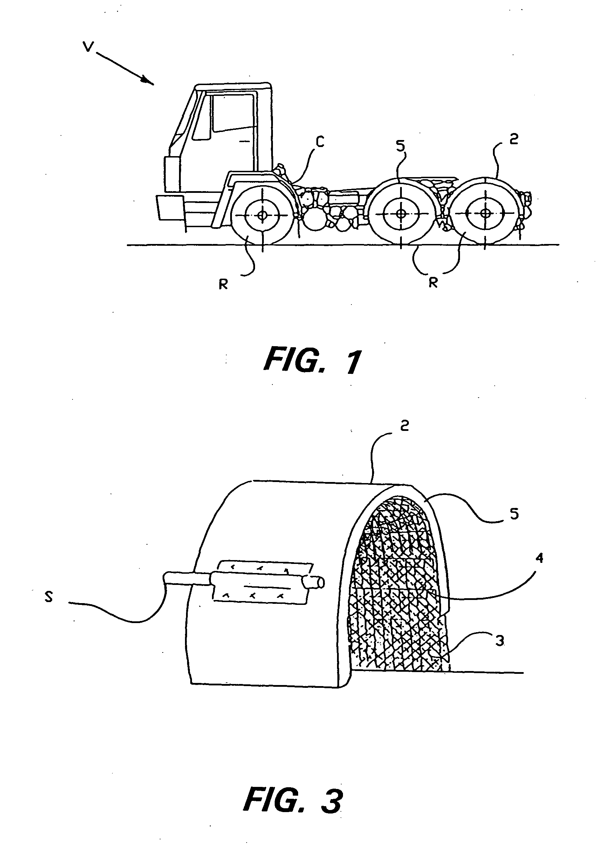

FIG. 1 is a diagrammatic side view of a commercial vehicle with a mudguard mounted thereto;

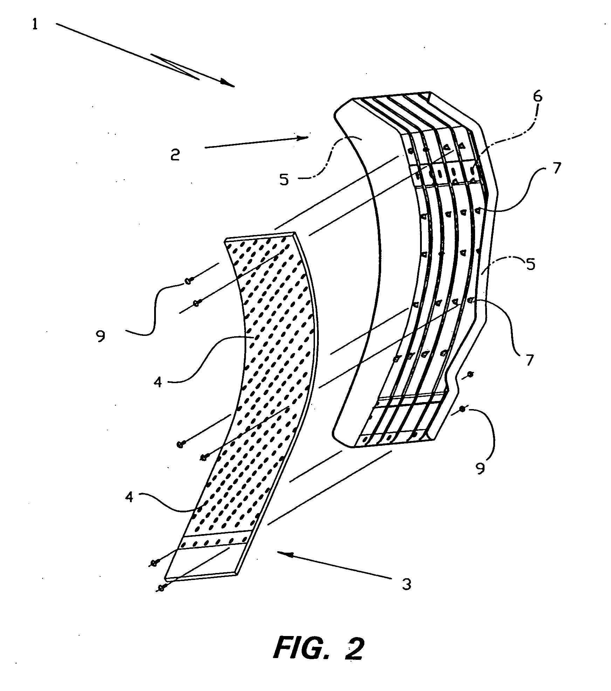

FIG. 2 is an exploded axonometric view of a mudguard structure according to the invention;

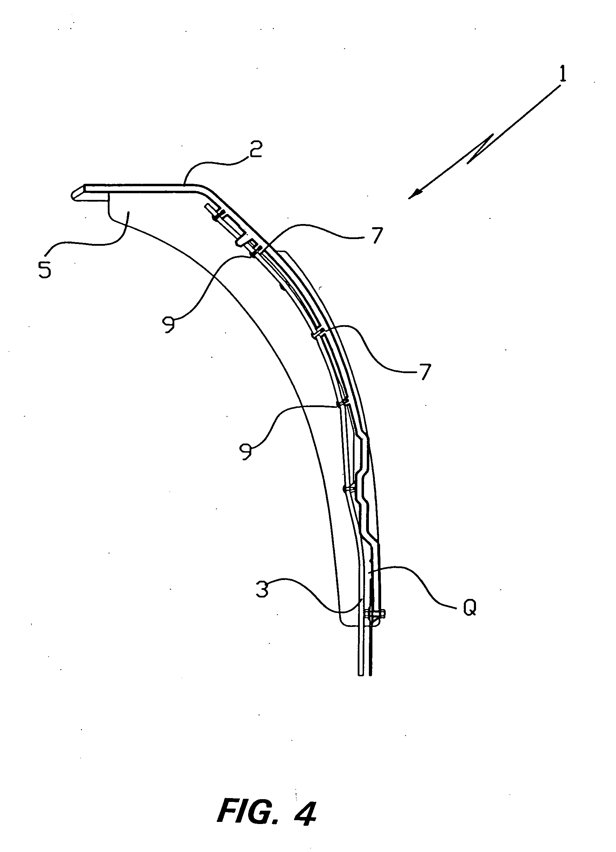

FIG. 3 is a diagrammatic axonometric view of a mudguard structure according to the invention;
FIG. 4 is a sectional side view of the mudguard structure of FIG. 2;

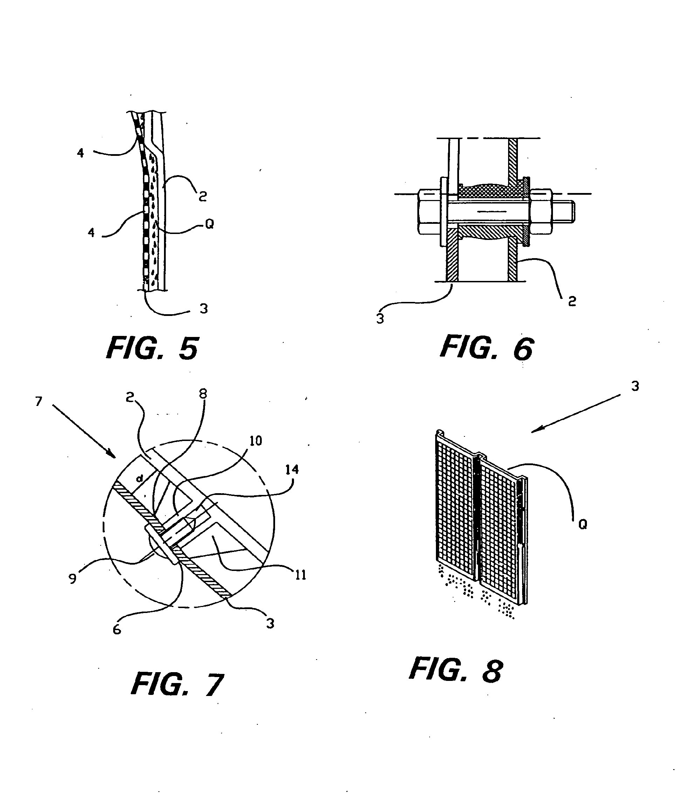

FIG. 5 is a sectional enlarged side view of the structure of FIG. 2;
FIG. 6 shows an enlarged attachment member according to prior art;
FIG. 7 shows an enlarged attachment member according to this invention;
FIG. 8 is a diagrammatic axonometric view of an embodiment of the sheet member.

### Detailed description of a preferred embodiment

Referring to the above figures, a mudguard structure for vehicles is shown, generally designated by numeral 1, which may be mounted, preferably but without limitation, to the chassis C of commercial motor vehicles V.

The mudguard structure 1 essentially comprises a convex cover wall 2, which is secured to the structure of the vehicle V by means of supports S and a sheet member 3 having apertures 4 for the passage of water raised by the wheels R.

Preferably, the cover wall 2 may have at least one side wall 5 and a number of holes 6 for the attachment means fastening the structure to the supports S of the vehicle's frame C.

A peculiar feature of the invention consists in that the cover wall 2 has a plurality of projections 7 extending inwardly radially from such wall and oriented towards the convexity. These projections have end portions 8 which are suitably shaped to receive attachment means 9 for securing the sheet member 3 to the bottom wall 2 at a predetermined distance d therefrom. Thus, the cover wall 2 and the sheet member 3 form a chamber Q for conveying the raised water.

Water thrown up by the wheels R against the mudguard structure passes through the suitably shaped apertures 4 arranged in the perforated sheet member 3, rebounds against the bottom wall 2 and is retained by the sheet member 3 in the chamber Q, which conveys it toward the roadway.

According to a preferred embodiment, as shown in the accompanying drawings, the convex cover wall 2 and the perforated sheet member 3 are substantially shaped like an arc of a arc of cylinder to better comply with the profile of the wheel R.

Other considerably different geometric shapes, not shown in the annexed figures, may be provided without departure from the inventive scope. For example, the cover wall 2 and the sheet member 3 may have an essentially planar shape and be positioned behind the wheels R with reference to the forward drive direction.

Each projection 7 which extends inwardly towards the convexity of the cover wall 2 is formed by a connecting member 10 which is substantially perpendicular to the bottom wall 7 and has a height d of 5 mm to 50 mm and preferably of about 10 mm.

Preferably, the connecting members 10 of the projections 7 have a substantially prismatic or cylindrical shape, but they may also have a decreasing thickness from the bottom wall 2 to the end portion 8.

They may also have side reinforcement tabs 11.

Suitably, the cover wall 2 may have at least one side wall 5 for better retention of water thrown up by the wheels R.

According to a preferred embodiment, the attachment means 9 for securing the sheet member 3 to the projections 7 are screw members engageable with the end portion 8 of the projections 7, which have suitably nut screw shaped cavities 14.

Advantageously, the cover wall, the side walls, if any, the projections 7 and the sheet member 3 are made by moulding a rigid material, preferably a thermoplastic material such as polypropylene, ABS, nylon, polycarbonate, or ABS-polycarbonate, PBT-polycarbonate or PET-polycarbonate copolymers.

A manufacturing method for making the mudguard structure 1 as described above comprises a plurality of sequential steps, i.e. a step a) of forming a convex cover wall and a successive step b) of forming projections on said cover wall, which extend from said cover wall towards its convex side.

The next steps are a step c) of forming a sheet member 3 and a plurality of apertures 4 for the passage of water therethrough and a step d) of forming in the sheet member at least one hole for the attachment means for securing the structure to the chassis C.

A step e) is carried out of providing attachment means 9 in said holes; which is followed by a step f) of securing the sheet member 3 to the projections 7. Thus a chamber Q is formed by the cover wall 2, for retaining water and conveying it towards the ground.

It is apparent that the above steps e) and f) may be carried out very easily by a single operator, in a much shorter time, prior to mounting of the structure 1 to the chassis C of the vehicle V.

Furthermore, multiple fastening points may be provided, with no additional labor, between the perforated sheet member 3 and the cover wall 2, each of such points being composed of a projection 7 and an attachment means 9, thereby reducing the effort at each fastening point and, as a result, the occurrence of tearing of the sheet member 3.

Maintenance and replacement operations may be easily performed by simply removing the perforated sheet member 3, while leaving the cover wall 2 with the projections 7 secured to the chassis C.

In accordance with a preferred embodiment the step a) of forming the cover wall 2 and the step b) of forming projections 7 on such cover wall are carried out simultaneously in a simple press moulding step, using a thermoplastic material preferably selected from the group consisting of polypropylene, ABS, nylon, polycarbonate, and ABS-polycarbonate, PBT-polycarbonate and PET-polycarbonate copolymers.

Also, the steps c) of forming the sheet member 3 and the apertures 4 for water passage therethrough and d) of forming the holes for the passage of the attachment means are carried out simultaneously in a simple press moulding step, using a thermoplastic material preferably selected from the group consisting of polypropylene, ABS, nylon, polycarbonate, and ABS-polycarbonate, PBT-polycarbonate and PET-polycarbonate copolymers.

The mudguard structure of this invention is susceptible of numerous modifications and changes, all falling within the inventive concept disclosed in the appended claims. All the details thereof may be replaced by other technically equivalent parts, and the materials may vary depending on different needs, without departure from the scope of the invention.

While the device and method for making it have been described with particular reference to the accompanying figures, the numerals referred to in the disclosure and claims are only used for the sake of a better intelligibility of the invention and shall not be intended to limit the claimed scope in any manner.

## Claims

1. A mudguard structure for a vehicle, particularly a commercial motor vehicle, for restricting water spray thrown up by the wheels (R), comprising a substantially convex cover wall (2) securable to the frame of a vehicle (V), a sheet member (3) having a plurality of apertures (4) for the passage of water spray thrown up by the wheel (R), **characterized in that** said cover wall (2) has a plurality of projections (7) extending radially inwardly and having end portions (8) so shaped to interact with attachment means (9) for securing said sheet member (3) to sai d cover wall (2) at a predetermined distance (d) from this latter so as to define with said cover wall (2) a chamber (Q) for conveying the sprayed water.

2. Mudguard structure as claimed in claim 1, **characterized in that** said cover wall (2) and said sheet member (3) have substantially the shape of a cylindrical arc to envelope the periphery of the wheel(R).

3. Mudguard structure as claimed in claim 1 or 2, **characterized in that** each of said end portions (8) comprises a connecting member (10) which has a predetermined height (d) and is substantially perpendicular to said cover wall (2).

4. Mudguard structure as claimed in claim 3, **characterized in that** said height is comprised between 5 mm and 50 mm and is preferably of about 10 mm.

5. Mudguard structure as claimed in claim 3, **characterized in that** said connecting members (10) have a substantially prismatic or cylindrical shape.

6. Mudguard structure as claimed in claim 3, **characterized in that** said connecting members (10) have a decreasing thickness from said bottom wall (2).

7. Mudguard structure as claimed in any of claims 1 to 6, **characterized in that** said connecting members (10) further have side reinforcement tabs (11).

8. Mudguard structure as claimed in any of the preceding claims, **characterized in that** said end portions (8) of said projections (7) has a cavity (14) said attachment means (9) for securing said sheet member (3) to said projections (7).

9. Mudguard structure as claimed in any of the preceding claims, **characterized in that** said cover wall (2) comprises at least one side portion (5).

10. Mudguard structure as claimed in any of the preceding claims, **characterized in that** said cover wall (2), said side portion (5) and said sheet member (3) are made of a substantially rigid material.

11. Mudguard structure as claimed in claim 10, **characterized in that** said substantially rigid material is a thermoplastic material of a plastic nature.

12. A manufacturing method for making a mudguard structure for vehicles as claimed in one or more of the preceding claims, **characterized in that** it comprises the following steps of:
a) providing of a substantially convex cover wall (2);
b) forming a plurality of projections (7) extending radially inwardly from said cover wall (2);
c) providing a sheet member (3) with a plurality of apertures (4) for the passage of water;
d) forming in said sheet member (9) at least one hole (h) for the passage of said attachment means (9);
e) insertion is said at least one hole (6) of attachment means (9);
f) securing said sheet member (9) to said projections (7) so as to define with said cover wall (2) a chamber (Q) for conveying water.

13. Method of manufacturing a mudguard structure for vehicles as claimed in claim 12, **characterized in that** said steps a) of forming the cover wall (2) and b) of forming projections (7) on said cover wall (2) are carried out simultaneously by moulding of a thermoplastic material.

14. Method of manufacturing a mudguard structure for vehicles as claimed in claim 12, **characterized in that** said steps c) of forming the sheet member (3) and the apertures (4) and d) of forming the holes for the attachment means (9) are carried out simultaneously by moulding of a thermoplastic material.

15. Method of manufacturing a mudguard structure for vehicles as claimed in claim 13, **characterized in that** said step a) of forming the cover wall, which is carried at the same time as said step b) includes forming at least one side wall (5).
